# EUROPÄISCHE PATENTANMELDUNG

(11) **EP 4 718 774 A1**
(43) Veröffentlichungstag der Anmeldung: **01.04.2026**
(21) Anmeldenummer: 24203264.7
(22) Anmeldetag: 27.09.2024
(51) Int. Cl.: H04L 9/40

(54) **VALIDIERUNG VON SERVICES AUS DEM INTERNET**

(71) Anmelder: Deutsche Telekom AG, 53113 Bonn (DE)
(72) Erfinder: Minow, Jascha, 64625 Bensheim (DE); Strohmer, Petra, 64579 Gernsheim (DE)
(74) Vertreter: karo IP

(57) **Zusammenfassung**

Die vorliegende Erfindung betriff Techniken zur Validierung eines Internet-Serviceanbieters mittels eines personalisierten Validierungs-Siegels, umfassend:
• Anfordern eines Dienstes angeboten von dem Internet-Serviceanbieters durch einen Nutzer über ein Nutzerendgerät, insbesondere einem Smartphone oder einem Computer, das mit einem Kommunikationsnetzwerk eines Netzwerkanbieters verbunden ist,
• Weiterleiten der Anfrage des Nutzers an einen einem Netzwerkanbieter zugeordneten Validierungs-Dienst, der die Identität des Internet-Serviceanbieters ermittelt,

Hinzufügen eines personalisierten dem Internet-Serviceanbieters unbekannten Validierungs-Siegels des Nutzers mittels des Validierungs-Dienst bei erfolgreicher Validierung des Internet-Serviceanbieters, wobei das Validierungs-Siegels in einer Darstellung des Dienstes des Internet-Serviceanbieters auf dem Nutzerendgerät oder auf einem weiteren Nutzerendgerät dargestellt wird, wobei das Hinzufügen des personalisierten Validierungs-Siegels des Nutzers verhindert wird, wenn der Internet-Serviceanbieter nicht erfolgreich validiert wird.

## Beschreibung

Die vorliegende Erfindung betrifft das technische Gebiet einer Validierung von Services aus dem Internet und insbesondere hierzu eingerichtetes Verfahren, ein System und/oder ein entsprechend eingerichtetes Validierungs-Siegel.

Im digitalen Zeitalter werden immer mehr Dienstleistungen über das Internet bereitgestellt, wodurch der Bedarf an sicherer und vertrauenswürdiger Authentifizierung von Internet-Serviceanbietern wächst. Betrügerische Internet-Serviceanbieter und gefälschte Websites haben in den letzten Jahren zugenommen, was zu erheblichen finanziellen Verlusten bei Nutzern und Unternehmen geführt hat. Bestehende Mechanismen, wie SSL-Zertifikate oder vertrauenswürdige Logos, bieten oft unzureichenden Schutz, da sie leicht gefälscht oder missbraucht werden können. Insbesondere fehlt es an einer Methode, die es Nutzern ermöglicht, sicherzustellen, dass ein Internet-Serviceanbieter tatsächlich vertrauenswürdig ist und der bereitgestellte Dienst legitim ist.

Im Jahr 2023 verursachten sogenannte "Fake Shops" im Internet weltweit finanzielle Schäden in Höhe von rund 48 Milliarden US-Dollar. In Deutschland wurden über 300.000 Nutzer Opfer solcher Fakeshops, die Produkte anbieten, deren Lieferung nach Zahlung jedoch ausbleibt. Ein weiteres Problem ist das Phänomen von Fakeshops, die existierende, legitime Online-Shops täuschend echt nachahmen, um sensible Informationen wie Anmelde- oder Zahlungsdaten zu stehlen und für kriminelle Aktivitäten zu missbrauchen. Bestehende Ansätze zur Identifikation von Fakeshops, wie etwa vertrauenswürdige Siegel (z.B. Trusted Shops oder TÜV), bieten häufig nur unzureichenden Schutz, da diese leicht kopiert und gefälscht werden können.

Die Herausforderung besteht darin, Fakeshops effektiv zu erkennen und den Nutzern eine klare Bestätigung über die Echtheit eines Online-Serviceanbieters zu bieten. Selbst technisch versierte Nutzer haben oft Schwierigkeiten, die Echtheit eines Siegels oder eines Zertifikats zu beurteilen, da viele dieser Siegel einfach nachgeahmt werden können, oft sogar durch den Einsatz künstlicher Intelligenz (KI).

Die Nutzer stehen vor der Herausforderung, die Authentizität von Internet-Serviceanbietern zu verifizieren. Betrügerische Websites sehen oft identisch zu den legitimen aus und nutzen visuelle Elemente wie Logos und Zertifikate, um Vertrauen zu erzeugen. Diese können jedoch leicht gefälscht werden. Bestehende Mechanismen bieten keine Möglichkeit für den Nutzer, ein individuell auf ihn zugeschnittenes Verifikationsmittel zu nutzen, um die Authentizität eines Dienstes sicherzustellen.

Dementsprechend ist es eine Aufgabe der Erfindung, Techniken bereitzustellen, die es einen Nutzer ermöglichen einen vertrauenswürdigen Internet-Serviceanbieter zuverlässig zu erkennen.

Die vorliegende Erfindung löst diese Aufgabe durch die unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Die vorliegende Erfindung bietet eine Lösung, indem sie ein personalisiertes Validierungs-Siegel einführt, das von einem Validierungs-Dienst bereitgestellt wird und dem Nutzer ermöglicht, die Authentizität eines Internet-Serviceanbieters zu verifizieren. Das Siegel ist dem Serviceanbieter unbekannt und wird nur nach erfolgreicher Validierung hinzugefügt. Dies schafft eine zusätzliche Sicherheitsebene und macht es für Betrüger schwierig, Nutzer zu täuschen.

Erfindungsgemäß wird ein Verfahren zur Validierung eines Internet-Serviceanbieters mittels eines personalisierten Validierungs-Siegels angegeben. Dieses Verfahren umfasst:
- Anfordern eines Dienstes durch einen Nutzer über ein Nutzerendgerät, das mit einem Kommunikationsnetzwerk eines Netzwerkanbieters verbunden ist,
   o das Nutzerendgerät ist insbesondere ein Smartphone, ein Tablett, ein Computer, also ein Gerät das zu Darstellung von Diensten aus dem Internet geeignet ist;
   ∘ bei dem Kommunikationsnetz kann es sich um ein Festnetz, ein Mobilfunknetz oder eine Kombination aus beiden handeln;
- Weiterleiten der Anfrage des Nutzers an einen einem Netzwerkanbieter zugeordneten Validierungs-Dienst, der die Identität des Internet-Serviceanbieters ermittelt,
   oder Internet-Serviceanbieter kann insbesondere im Vorfeld seine Identität an den Netzwerkanbieter übermittelt haben und sich entsprechend authentifiziert und/oder autorisiert haben;
- Hinzufügen eines personalisierten dem Internet-Serviceanbieters unbekannten Validierungs-Siegels des Nutzers mittels des Validierung-Dienstes bei erfolgreicher Validierung des Internet-Serviceanbieters, wobei das Validierungs-Siegel in einer Darstellung des Dienstes des Internet-Serviceanbieters auf dem Nutzerendgerät oder einem weiteren Nutzerendgerät hinzugefügt wird,
   ∘ der Nutzer kann beispielsweise mittels seines Computers den Dienst anfragen, wobei das Validierungs-Siegel von dem Netzwerkbetreiber auf das Smartphone des Nutzers übermittelt wird. Hierzu kann der Netzwerkbetreiber eigens eine Validierung-App anbieten; es ist aber auch möglich das Validierungs-Siegel auf demselben Gerät anzuzeigen mit dem auch die Anfrage getätigt wird. So kann beispielsweise die Webseite des Internet-Serviceanbieters auf dem Nutzerendgerät angezeigt werden und das Validierungs-Siegel auf dem Bildschirm ebenfalls angezeigt werden. Bevorzugt wird es in einer Art Overlay auf einer Stelle des Bildschirms angezeigt, insbesondere wird das Validierungs-Siegel auf einer immer gleichen Stelle des Bildschirms angezeigt, sodass der Nutzer dies nicht aufwendig suchen muss. Es kann vorgesehen sein, dass das Validierungs-Siegel wieder von dem Bildschirm entfernt wird, wenn der Nutzer durch ein Antippen auf das Validierungs-Siegel dieses bestätigt. Auf diese Weise wird erreicht, dass der entsprechende Bereich des Bildschirms wieder entsprechend der eigentlichen Dienstdarstellung angezeigt werden kann;
   ∘ der Validierungsdienst kann das Validierungs-Siegel insbesondere in einem dafür eingerichteten Datenfeld eines Internetprotokolls einbringen. Insbesondere wird also der Datenstrom des Internetdienstes von dem Internet-Serviceanbieter über den Validierungs-Dienst geroutet, sodass dieser den Datenstrom entsprechend anpassen kann. In diesem Sinne dient der Validierung-Dienst als eine Art Proxy über den auch die Anfrage von dem Nutzerendgerät an den Internet-Serviceanbieter gerichtet werden kann;
- Verhindern des Hinzufügens des personalisierten Validierungs-Siegels des Nutzers, wenn der Internet-Serviceanbieter nicht erfolgreich validiert wird.

Die Erfindung ermöglicht eine sichere Validierung des Internet-Serviceanbieters anhand des Validierungs-Siegels, die Sicherheit unter anderem dadurch gewährleistet, dass die konkrete Ausgestaltung des Validierungs-Siegels dem Internet-Serviceanbieter unbekannt ist, sodass das Validierungs-Siegel nicht nachahmen bzw. fälschen kann. Der Einsatz eines personalisierten Validierungs-Siegels erhöht die Sicherheit erheblich, da das Siegel nur dem Nutzer und dem Validierungs-Dienst bekannt ist, nicht jedoch dem Internet-Serviceanbieter.

In einer Ausführungsform wird das personalisierte Validierungs-Siegel als visuelles und/oder auditives Signal bereitgestellt, das zuvor vom Nutzer festgelegt wurde.

Dies erhöht die Flexibilität für den Nutzer und ermöglicht eine individuelle Anpassung des Validierungs-Siegels an seine Präferenzen. Durch die Verwendung visueller und/oder auditiver Elemente kann der Nutzer schnell und intuitiv erkennen, ob ein Dienst validiert wurde. In der Ausführungsform des Legierungssignals als Audiosignal kann beispielsweise ein Lied oder eine entsprechende Nachricht von dem Nutzer spezifiziert werden. Dies hat den Vorteil, dass hierdurch die bildliche Darstellung des Internet-Services auf dem Bildschirm nicht beeinträchtigt wird. Zudem ermöglichen es die verschiedenen Formen des Validierungssignals, dass dieses auch für Personen mit körperlichen Einschränkungen erfahrbar wird. Beispielsweise können auch blinde Personen das Audiosignal hören.

In einer Ausführungsform wird die Identität des Internet-Serviceanbieters durch Netzwerkinformationen wie IP-Adressen oder durch einen KI-Algorithmus, der die Internetseite des Anbieters analysiert, ermittelt.

Dies stellt sicher, dass die Validierung auf verschiedenen Ebenen erfolgt und Betrug durch eine tiefgehende Analyse des Anbieters verhindert wird. Der Einsatz von KI erhöht die Genauigkeit der Verifizierung. Zudem kann das KI Verfahren auch dann angewendet werden, wenn der Internet-Serviceanbieter nicht identifiziert werden konnte. In diesem Fall können beispielsweise Google Bewertungen und/oder die Darstellung des Dienstes von der künstlichen Intelligenz analysiert werden, um abzuschätzen, ob der Internet-Serviceanbieter vertrauenswürdig ist. Ist dieser vertrauenswürdig, kann das Validierungs-Siegel hinzugefügt werden. Die künstliche Intelligenz kann hierzu im Vorfeld entsprechend trainiert werden, indem ihr in der Trainingsphase jeweils Datensätze von vertrauenswürdigen Internet-Serviceanbietern und nicht-vertrauenswürdigen Internet-Serviceanbieter bekannt gemacht werden und diese entsprechend als vertrauenswürdig und nicht-vertrauenswürdig markiert werden.

In einer Ausführungsform wird eine verschlüsselte Kommunikation zwischen dem Nutzerendgerät und dem Internet-Serviceanbieter bereitgestellt.

Die Verschlüsselung schützt die Daten vor Manipulation und sorgt dafür, dass die Validierung sicher und zuverlässig erfolgt.

In einer Ausführungsform wird das Validierungs-Siegel von dem Nutzerendgerät erfasst und bei der Anforderung des Dienstes an den Validierungs-Dienst übermittelt.

Dies ermöglicht eine nahtlose Interaktion zwischen dem Nutzerendgerät und dem Validierungs-Dienst, was zu einer schnellen und zuverlässigen Überprüfung der Anbieteridentität führt. Dies ermöglicht es ebenso, dass für jede Anfrage ein individuelles persönliches Validierungs-Siegel erzeugt und genutzt werden kann. Das Nutzerendgerät kann dieses Validierungs-Siegel an den Validierung-Dienst für jede Anfrage erneut übertragen.

Bevorzugt führt der Validierungs-Dienst basierend auf dem Validierungs-Siegel eine Filterfunktion durch, die den Zugang des Nutzers zu Diensten aus dem Internet regelt, insbesondere beschränkt.

Das Verfahren, bei dem der Validierungs-Dienst basierend auf dem Validierungs-Siegel eine Filterfunktion durchführt, regelt den Zugang des Nutzers zu Diensten aus dem Internet und kann diesen insbesondere beschränken. Technisch wirkt dies, indem die Filterfunktion auf Informationen basiert, die mit dem Validierungs-Siegel verknüpft sind, wie beispielsweise Nutzerprofile oder Zugangsrechte. Diese Funktion arbeitet entweder auf Netzwerkschicht- oder Anwendungsebene und überprüft, ob der angeforderte Dienst den Kriterien entspricht, die mit dem Validierungs-Siegel verbunden sind. Falls dies nicht der Fall ist, wird der Zugang blockiert oder beschränkt. Ein besonderer Vorteil ist der erhöhte Schutz, den diese Filterfunktion bietet, insbesondere für Kinder oder andere schutzbedürftige Personen, deren Zugriff auf bestimmte Inhalte eingeschränkt werden muss. Der Schutz ist personalisiert, da die Filterung auf den Nutzer zugeschnitten ist, was zu einer flexiblen und zielgerichteten Regelung des Internetzugangs führt. Darüber hinaus vereinfacht diese Funktion die Verwaltung von Zugangsrechten, da Filterregeln zentral durch den Validierungs-Dienst und nicht individuell für jedes Gerät festgelegt werden können.

Eine weitere bevorzugte Variante des Verfahrens sieht vor, dass der Validierungs-Dienst eine Datenbank mit legitimen und betrügerischen Internet-Serviceanbietern führt, um betrügerische Anbieter automatisch zu identifizieren und das Hinzufügen des personalisierten Validierungs-Siegels zu verhindern.

Technisch bewirkt dies, dass der Validierungs-Dienst auf eine ständig aktualisierte Datenbank zugreift, in der Informationen über legitime und betrügerische Anbieter gespeichert sind. Bei einer Anfrage prüft der Validierungs-Dienst, ob der Anbieter als legitim oder betrügerisch eingestuft ist. Wird der Anbieter als betrügerisch identifiziert, wird das personalisierte Validierungs-Siegel nicht angezeigt. Diese automatisierte Überprüfung bietet einen entscheidenden Vorteil, da der Schutz vor Fakeshops und Phishing in Echtzeit erfolgt und der Nutzer vor Betrug bewahrt wird, bevor er sensible Informationen preisgibt. Darüber hinaus erhöht die Automatisierung der Überprüfung die Effizienz des Systems und stellt sicher, dass der Schutz stets auf dem neuesten Stand der Bedrohungen basiert.

Bevorzugt kann der Validierungs-Dienst die Identität des Nutzers anhand einer Rufnummer-Kennung und/oder einer IP-Adresse des Nutzeranschlusses ermittelt und dem Internet-Serviceanbieter eine Information übermittelt, wenn der Nutzer erfolgreich validiert wurde.

Technisch gesehen ermöglicht dies die automatische Identifizierung des Nutzers durch eindeutige Kennungen wie Rufnummer oder IP-Adresse, ohne dass der Nutzer zusätzliche Authentifizierungsschritte durchführen muss. Dies schafft eine zusätzliche Sicherheitsebene, da die Identität des Nutzers zuverlässig verifiziert wird. Ein Vorteil ist, dass dies die Benutzererfahrung nahtlos und bequem gestaltet, da die Identifikation automatisch erfolgt. Gleichzeitig bietet es dem Internet-Serviceanbieter die Sicherheit, dass es sich um einen legitimen Nutzer handelt, wodurch die Gefahr von Missbrauch durch gefälschte Identitäten oder unautorisierte Zugriffe minimiert wird.

Gemäß einem zweiten Aspekt der Erfindung ist ein personalisierbares Validierungs-Siegel für die Authentifizierung eines Internet-Serviceanbieters angegeben, aufweisend die folgenden Eigenschaften:
- Hinzufügbar in eine Darstellung des Dienstes des Internet-Serviceanbieters auf dem Nutzerendgerät oder einem weiteren Nutzerendgerät durch einen Validierungs-Dienst nach einer erfolgreichen Validierung des Dienstes,
- Eindeutigkeit des Validierungs-Siegels für den Nutzer, wobei das Validierungs-Siegel dem Internet-Serviceanbieter unbekannt ist und/oder
- Erstellbar durch den Nutzer, insbesondere mittels des Nutzerendgeräts.

Das personalisierbare Validierungs-Siegel weist mehrere technische Merkmale auf, die es für die Authentifizierung von Internet-Serviceanbietern besonders geeignet machen. Das Validierungs-Siegel wird nach erfolgreicher Validierung des Internet-Serviceanbieters durch den Validierungs-Dienst in die Darstellung des Dienstes auf dem Nutzerendgerät integriert. Diese Integration hat den wesentlichen technischen Effekt, dass der Nutzer in der Lage ist, sofort und eindeutig zu erkennen, ob der Dienst vertrauenswürdig und authentifiziert ist. Dadurch wird die Sicherheit des Nutzers erheblich gesteigert, da er nicht auf allgemeine und leicht fälschbare Sicherheitsmerkmale angewiesen ist. Ein weiterer wichtiger technischer Vorteil ergibt sich aus der Tatsache, dass das Validierungs-Siegel dem Internet-Serviceanbieter unbekannt ist. Dies verhindert, dass der Anbieter das Siegel fälschen oder missbrauchen kann, was die Verlässlichkeit des Systems erhöht. Die Möglichkeit, dass das Validierungs-Siegel vom Nutzer selbst erstellt werden kann, bietet zusätzliche Flexibilität und Individualität, da der Nutzer die Kontrolle über die Erscheinungsform und die Nutzung des Siegels hat. Dies trägt zur Personalisierung des Sicherheitssystems bei und ermöglicht eine höhere Akzeptanz durch den Nutzer.

Bevorzugt kann das Validierungs-Siegel in verschiedenen Formaten bereitgestellt werden kann, einschließlich visueller Symbole, Audio-Signalen und/oder Sprachmeldungen. Technisch bewirkt dies eine größere Flexibilität und Benutzerfreundlichkeit, da der Nutzer je nach Präferenz wählen kann, in welcher Form er das Validierungs-Siegel wahrnehmen möchte. Dies bietet insbesondere den Vorteil, dass das Siegel auch in Situationen genutzt werden kann, in denen visuelle Bestätigungen nicht ideal sind, wie z.B. bei barrierefreien Anwendungen für sehbehinderte Nutzer. Audio-Signale oder Sprachmeldungen bieten in solchen Fällen eine zuverlässige Alternative, die dem Nutzer dennoch eine klare Authentifizierung ermöglicht. Die Vielfalt der verfügbaren Formate erhöht somit die Reichweite und Anwendbarkeit des Validierungssystems und passt sich an die individuellen Bedürfnisse des Nutzers an.

Zusätzlich kann das Validierungs-Siegel eine Filterfunktion integriert, die bestimmte Dienste basierend auf dem Alter des Nutzers oder festgelegten Benutzerprofilen blockiert oder zulässt. Technisch gesehen hat dies den Effekt, dass das Validierungs-Siegel nicht nur als reines Authentifizierungswerkzeug fungiert, sondern auch als Kontrollmechanismus, der den Zugriff auf bestimmte Dienste regeln kann. Dies ist besonders nützlich im Hinblick auf den Schutz von Minderjährigen oder anderen schutzbedürftigen Personen, deren Zugang zu unangemessenen oder gefährlichen Inhalten eingeschränkt werden muss. Durch die Verknüpfung der Filterfunktion mit dem Alter oder dem Benutzerprofil kann das System automatisch und präzise festlegen, welche Dienste zugelassen oder blockiert werden. Diese Filterung erhöht die Sicherheit und den Schutz des Nutzers, während gleichzeitig eine bedarfsgerechte Steuerung des Internetzugangs ermöglicht wird.

Das Validierungs-Siegel kann durch den Nutzer über eine mobile Anwendung oder eine Benutzeroberfläche erstellt, geändert und/oder gelöscht werden. Der technische Vorteil dieses Merkmals liegt in der erhöhten Kontrolle, die der Nutzer über sein eigenes Validierungs-Siegel hat. Durch die Nutzung einer mobilen Anwendung oder Benutzeroberfläche kann der Nutzer das Siegel jederzeit anpassen oder entfernen, was eine hohe Flexibilität und Anpassungsfähigkeit ermöglicht. Dies trägt nicht nur zur Personalisierung bei, sondern erlaubt es dem Nutzer auch, auf geänderte Sicherheitsanforderungen oder Vorfälle schnell zu reagieren, indem er sein Siegel ändert oder aktualisiert. Der technische Effekt dieser dynamischen Kontrolle liegt darin, dass der Nutzer stets in der Lage ist, sein Siegel auf dem neuesten Stand zu halten und sich so vor möglichen Sicherheitsrisiken zu schützen, was zu einer langfristig besseren Sicherheit und Nutzererfahrung führt.

Gemäß einem dritten Aspekt der Erfindung ist ein System zur Validierung eines Internet-Serviceanbieters, bereitgestellt durch einen Netzwerkanbieter, angegeben, wobei das System umfasst:
- ein Nutzerendgerät, das mit einem Kommunikationsnetzwerk des Netzwerkanbieters verbunden ist,
- ein Validierungs-Plattform, die einen Validierungs-Dienst bereitstellt, eingerichtet zum Empfangen von Anfragen eines Internetdienstes von dem Nutzerendgerät und zum Überprüfen einer Identität von Internet-Serviceanbietern überprüft, wobei der Validierungs-Dienst eingerichtet ist ein personalisiertes Validierungs-Siegel des Nutzers bei erfolgreicher Validierung des Internet-Serviceanbieters zu einer Darstellung des Dienstes auf dem Nutzerendgerät oder auf einem weiteren Nutzerendgerät hinzuzufügen.

Die Vorteile und technischen Effekte des Systems sind analog zu denen des Verfahrens. In dem das System von dem Netzwerkanbieter, der insbesondere ein Telekommunikationsanbieter ist, bereitgestellt wird, wird der Vorteil erzielt, dass diesem die Identität des Nutzers bekannt ist und dass die Kommunikation mit dem Internet-Serviceanbieter zumindest auf dem der letzten Kommunikationsstrecke bis zum Nutzer über das Kommunikationsnetzwerk des Netzwerkanbieters verläuft, sodass die entsprechenden Daten zuverlässig über Validierung-Dienst geroutet werden können. Der Telekommunikationsanbieter weiß insbesondere auch, ob der Nutzer noch weitere Nutzer Endgeräte besitzt über die das Validierung Siegel angezeigt werden kann. Zudem weiß der Telekommunikationsanbieter, wie diese weiteren Nutzerendgerät des Nutzers kommunikationstechnisch erreicht.

Das Systems insbesondere zur Ausführung der Schritte des Verfahrens eingerichtet.

Gemäß eines vierten Aspekts der Erfindung ist eine Validierungs-Plattform eingerichtet zur Validierung eines Internet-Serviceanbieters mittels eines Validierungs-Dienstes angegeben, wobei die Validierung-Plattform eingerichtet zum
- Empfangen einer Anforderung eines Dienstes von einem Nutzerendgerät, wobei der Dienst von dem Internet-Serviceanbieters im Internet angeboten wird,
- Empfangen und/oder Ermittlung einer Identität des Internet-Serviceanbieters ermittelt,
- Hinzufügen eines dem Internet-Serviceanbieters unbekannten Validierungs-Siegels des Nutzers bei erfolgreicher Validierung des Internet-Serviceanbieters zu einer Darstellung des Dienstes auf dem Nutzerendgerät oder auf einem weiteren Nutzerendgerät.

Die Validierung-Plattform weist entsprechende Schnittstellen zur Kommunikation auf. Zudem weist die Validierung-Plattform eine Rechnereinheit auf durch welche ein Algorithmus des Validierung-Dienstes ausführbar ist.

Im Folgenden wird ein bevorzugtes Ausführungsbeispiel der vorliegenden Erfindung unter Bezugnahme auf die begleitende Figur erläutert:

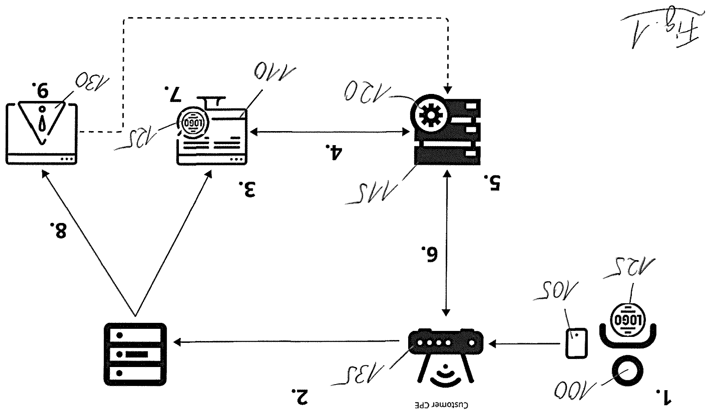

Fig. 1: zeigt schematisch Techniken zur Validierung eines Internet-Services;

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Die vorliegende Erfindung wird durch die Fig. 1 veranschaulicht, die den technischen Ablauf des Validierungsprozesses zeigt. Ein Nutzer 100 greift über ein Nutzerendgerät 105, wie ein Smartphone 105 oder einen Computer 105, auf den Dienst eines Internet-Serviceanbieters 110, insbesondere einen Online-Shop, zu. Die Anfrage wird an einen Validierungs-Dienst 120 auf einer Validierungs-Plattform 115 weitergeleitet, der die Identität des Anbieters überprüft. Der Validierungs-Dienst 120 kann eine Analyse basierend auf Netzwerkinformationen oder einer Datenbank durchführen, die legitime und betrügerische Anbieter unterscheidet. Sobald die Identität des Anbieters bestätigt wurde, wird ein personalisiertes Validierungs-Siegel 125 des Nutzers hinzugefügt, das dem Internet-Serviceanbieter nicht bekannt ist. Dieses Siegel 125 wird in die Benutzeroberfläche des Dienstes auf dem Nutzerendgerät des Nutzers eingebettet, um die erfolgreiche Validierung anzuzeigen. Im Fall einer fehlgeschlagenen Validierung wird das Siegel nicht hinzugefügt, und der Nutzer erhält bevorzugt eine Warnung 130, die ihn vor einem möglichen Betrug schützt.

Die Erfindung adressiert somit die wachsende Bedrohung durch betrügerische Internet-Serviceanbieter und bietet eine sichere, zuverlässige und personalisierte Methode zur Überprüfung von Online-Diensten.

Die Erfindung lässt sich anhand des in Fig. 1 dargestellten technischen Ablaufs verdeutlichen:
Schritt 1: Nutzer und Registrierung des Validierungs-Siegels: Ein Kunde, der beispielsweise über einen Netzwerkanbieter wie die Deutsche Telekom Zugang zum Internet hat, registriert sich für das persönliche Validierungs-Siegel. Der Nutzer kann entweder ein eigenes Bild als Siegel hochladen oder der Netzwerkanbieter generiert automatisch ein individuelles Siegel für den Nutzer. Dieses Siegel kann auf dem Nutzerendgerät 105 oder einem Kundennetzwerk-Endgerät (CPE) des Nutzers gespeichert werden, wodurch eine sichere und individuelle Verifizierung sichergestellt wird.
Schritt 2: Der Nutzer nutzt seinen Festnetzanschluss (z.B. DSL oder Glasfaser) oder eine Mobilfunkverbindung des Netzwerkanbieters, um auf eine Webseite des Internet-Serviceanbieters 110 zuzugreifen. Der Netzwerkanbieter kann die Identität und den Standort des Nutzers jederzeit anhand der Line ID (Festnetz) oder IMSI (Mobilfunk) verifizieren.
Schritt 3: Auf der Webseite eines Internet-Serviceanbieters, insbesondere des Online Shops, der mit Netzwerkanbieter zusammenarbeitet um die Legitimität seines Unternehmens zu beweisen (ein "Trusted Shop") ist ein Bildplatzhalter vorgesehen, in welchen Validierungs-Siegel integriert werden kann.
Schritt 4: Beim Besuch der Webseite durch den Nutzer 100, wird dessen Anfrage an den Validierungs-Dienst 120 geleitet, welcher optional anhand der Adressdaten (IP) bestimmen kann, ob es sich bei der Anfrage, um einen Kunden der Deutschen Telekom handelt und um welchen (Kunden/Haushalt).
Schritt 5: Die Anfrage an den Validierungs-Dienst 120 ergibt, dass es sich um einen Kunden des Netzwerkanbieters aus Heidelberg handelt.
Schritt 6: Im Falle eines Festnetzanschlusses, wird nun bei der CPE 135 des betreffenden Kunden, die Übermittlung des Validierungs-Siegels angefragt. Ein Pointer auf dieses Validierungs-Siegel 125 wird von dem den Validierungs-Dienst 120 an den Web Shop übergeben. Durch die Pointer Information kann der Web-Shop das Validierungs-Siegel 125 in die Darstellung des Web-Shops einpflegen ohne Kenntnis von dem Validierungs-Siegel 125 an sich zu haben. Beim Aufruf des Web-Shops durch den Nutzer wird das Validierungs-Siegel 125 auf das der Pointer zeigt, nur den Nutzer sichtbar abgerufen. Ein solcher Pointer kann beispielsweise eine URL sein. Es ist auch möglich, dass das Validierungs-Siegel 125 nur dem vertrauenswürdigen Validierungs-Dienst 120 bekannt ist der das Validierungs-Siegel 125 in den Datenstrom von dem Web-Shop an den Nutzer einpflegen kann, wenn der Datenstrom über den Validierungs-Dienst 120 geleitet wird. Die erste Option bietet den Vorteil, dass der Validierungs-Dienst 120 bzw. das ihm zugrundeliegende Netzwerk entlastet wird. Das Validierungs-Siegel wird dem Web Shop insbesondere verschlüsselt übergeben, sodass das Validierungs-Siegel für den Service-Anbieter weiterhin unbekannt bleibt, selbst wenn er es in die Webseite einpflegt. Das Nutzerendgerät erzeugt und kennt den Schlüssel zum Verschlüssen und Entschlüsseln und teilt diesen niemandem anders mit. Alternativ kann auch der Validierungs-Dienst 120 das Validierungs-Siegel in die Darstellung der Webseite integrieren. Da der Nutzer dem Netzwerkanbieter vertraut, kann dem Netzwerkanbieter das Validierungs-Siegel bekannt gemacht werden.
Schritt 7: Auf der Darstellung des Webshop wird nun das individuelle Validierungs-Siegel des Kunden angezeigt, wodurch der Nutzer erkennt, es handelt sich um einen legitimen und authentifizierten Shop. Der Nutzer 100 erkennt sein eigenes Siegel 125 sofort.
Schritt 8: Besucht der Nutzer eine betrügerische Webseite oder einen Fakeshop, erhält diese Webseite keinen Zugang zum Validierungs-Dienst des Netzwerkanbieters. Da das personalisierte Siegel des Nutzers nicht auf der betrügerischen Seite angezeigt wird, erkennt der Nutzer sofort, dass es sich um einen potenziellen Fakeshop handelt und kann die Seite verlassen, bevor ein Betrug stattfinden kann.

### Technische Umsetzung der Validierung

Der Validierungsprozess kann durch eine Kombination von Netzwerkinformationen, wie der IP-Adresse oder Zertifikaten des Internet-Serviceanbieters, sowie durch den Einsatz künstlicher Intelligenz (KI) unterstützt. Der KI-Algorithmus analysiert die Webseite des Internet-Serviceanbieters, um sicherzustellen, dass es sich um einen legitimen Anbieter handelt. Durch die Verwendung von Verschlüsselungstechnologien wird sichergestellt, dass alle übermittelten Daten während der Validierung sicher sind.

Darüber hinaus kann das Validierungs-Siegel des Nutzers auf verschiedene Weise dargestellt werden, beispielsweise als visuelles oder auditives Signal, das vom Nutzer individuell festgelegt wurde. Dies ermöglicht eine schnelle und intuitive Verifizierung, da der Nutzer durch das personalisierte Siegel sofort erkennt, ob der Internet-Serviceanbieter vertrauenswürdig ist.

Das personalisierte Validierungs-Siegel ist nicht nur auf Online-Shops beschränkt, sondern kann auf alle Arten von Internet-Serviceanbietern angewendet werden. Es kann in verschiedenen Formaten angezeigt werden, einschließlich visueller Symbole oder Audio-Signale, die den Nutzer auf die erfolgreiche Validierung hinweisen. Zudem kann das Siegel vom Nutzer selbst erstellt oder über eine mobile Anwendung angepasst werden.

## Patentansprüche

1. Verfahren zur Validierung eines Internet-Serviceanbieters (110) mittels eines personalisierten Validierungs-Siegels (125), umfassend:
• Anfordern eines Dienstes angeboten von dem Internet-Serviceanbieters durch einen Nutzer (100) über ein Nutzerendgerät (105), insbesondere einem Smartphone (105) oder einem Computer, das mit einem Kommunikationsnetzwerk eines Netzwerkanbieters verbunden ist,
• Weiterleiten der Anfrage des Nutzers an einen einem Netzwerkanbieter zugeordneten Validierungs-Dienst (120), der die Identität des Internet-Serviceanbieters (110) ermittelt,
• Hinzufügen eines personalisierten dem Internet-Serviceanbieters unbekannten Validierungs-Siegels (125) des Nutzers (100) mittels des Validierungs-Dienst (120) bei erfolgreicher Validierung des Internet-Serviceanbieters (110), wobei das Validierungs-Siegels (125) in einer Darstellung des Dienstes des Internet-Serviceanbieters (110) auf dem Nutzerendgerät oder auf einem weiteren Nutzerendgerät dargestellt wird, wobei das Hinzufügen des personalisierten Validierungs-Siegels (125) des Nutzers verhindert wird, wenn der Internet-Serviceanbieter (110) nicht erfolgreich validiert wird.

2. Verfahren nach Anspruch 1, wobei das personalisierte Validierungs-Siegel als visuelles und/oder auditives Signal bereitgestellt wird, das zuvor vom Nutzer festgelegt wurde, um eine eindeutige Authentifizierung zu ermöglichen.

3. Verfahren nach einem der Ansprüche 1 bis 2, wobei die Identität des Internet-Serviceanbieters durch Analyse von Netzwerkinformationen, wie IP-Adresse oder Serverzertifikaten, ermittelt wird und/oder durch einen KI Algorithmus der eine Internetseite des Internet-Serviceanbieters analysiert ermittelt wird.

4. Verfahren nach einem der Ansprüche 1 bis 3, wobei der Validierungs-Dienst eine verschlüsselte Kommunikation zwischen dem Nutzerendgerät und dem Internet-Serviceanbieter bereitstellt, um die Integrität der Daten während der Validierung sicherzustellen.

5. Verfahren nach einem der Ansprüche 1 bis 4, wobei das Validierungs-Siegel von dem Nutzerendgerät erfassbar ist und bei der Anforderung des Dienstes durch den Nutzer von dem Nutzerendgerät an den Validierungs-Dienst übermittelt wird.

6. Verfahren nach einem der Ansprüche 1 bis 5, wobei der Validierungs-Dienst basierend auf dem Validierungs-Siegel eine Filterfunktion durchführt, die den Zugang des Nutzers zu Diensten aus dem Internet regelt, insbesondere beschränkt.

7. Verfahren nach einem der Ansprüche 1 bis 6, wobei der Validierungs-Dienst eine Datenbank mit legitimen und betrügerischen Internet-Serviceanbietern führt, um betrügerische Anbieter automatisch zu identifizieren und das Hinzufügen des personalisierten Validierungs-Siegels zu verhindern.

8. Verfahren nach einem der Ansprüche 1 bis 7, wobei der Validierungs-Dienst eine Identität des Nutzers basierend auf einer Rufnummer-Kennung und/oder einer IP Adresse des Nutzeranschlusses ermittelt und dem Internet-Serviceanbieters eine Information übermittelt, wenn der Nutzer erfolgreich validiert wurde.

9. Verfahren nach einem der Ansprüche 1 bis 7, wobei das Validierungs-Siegel verschlüsselt von dem Nutzerendgerät an den Validierungs-Dienst übertragen wird, wie der Validierungs-Dienst den Schlüssel zum Entschlüsseln des Validierungs-Siegels besitzt.

10. Personalisierbares Validierungs-Siegel für die Authentifizierung eines Internet-Serviceanbieters, aufweisend die folgenden Eigenschaften:
• Hinzufügbar in eine Darstellung des Dienstes des Internet-Serviceanbieters auf dem Nutzerendgerät durch einen Validierungs-Dienst nach einer erfolgreichen Validierung des Dienstes,
• Eindeutigkeit des Validierungs-Siegels für den Nutzer, wobei das Validierungs-Siegel dem Internet-Serviceanbieter unbekannt ist und/oder
• Erstellbar durch den Nutzer, insbesondere mittels des Nutzerendgeräts.

11. Personalisierbares Validierungs-Siegel nach Anspruch 10, wobei das Validierungs-Siegel in verschiedenen Formaten bereitgestellt wird, einschließlich visuellen Symbolen, Audio-Signalen und/oder Sprachmeldungen.

12. Personalisierbares Validierungs-Siegel nach einem der Ansprüche 10 bis 11, wobei das Validierungs-Siegel eine Filterfunktion integriert, die bestimmte Dienste basierend auf dem Alter des Nutzers oder festgelegten Benutzerprofilen blockiert oder zulässt.

13. Personalisierbares Validierungs-Siegel nach einem der Ansprüche 10 bis 12, wobei das Validierungs-Siegel durch den Nutzer über eine mobile Anwendung oder eine Benutzeroberfläche erstellt, geändert und/oder gelöscht werden kann.

14. System zur Validierung eines Internet-Serviceanbieters, bereitgestellt durch einen Netzwerkanbieter, umfassend:
• ein Nutzerendgerät, das mit einem Kommunikationsnetzwerk des Netzwerkanbieters verbunden ist,
• ein Validierungs-Plattform, die einen Validierungs-Dienst bereitstellt, eingerichtet zum Empfangen von Anfragen eines Internetdienstes von dem Nutzerendgerät und zum Überprüfen einer Identität von Internet-Serviceanbietern überprüft, wobei der Validierungs-Dienst eingerichtet ist ein personalisiertes Validierungs-Siegel des Nutzers bei erfolgreicher Validierung des Internet-Serviceanbieters zu einer Darstellung des Dienstes auf dem Nutzerendgerät oder auf einem weiteren Nutzerendgerät hinzuzufügen.

15. Validierungs-Plattform eingerichtet zur Validierung eines Internet-Serviceanbieters mittels eines Validierungs-Dienstes und eingerichtet zum
• Empfangen einer Anforderung eines Dienstes von einem Nutzerendgerät, wobei der Dienst von dem Internet-Serviceanbieters im Internet angeboten wird,
• Empfangen und/oder Ermittlung einer Identität des Internet-Serviceanbieters ermittelt,
• Hinzufügen eines dem Internet-Serviceanbieters unbekannten Validierungs-Siegels des Nutzers bei erfolgreicher Validierung des Internet-Serviceanbieters zu einer Darstellung des Dienstes auf dem Nutzerendgerät oder auf einem weiteren Nutzerendgerät.

## Geänderte Patentansprüche

### Geänderte Patentansprüche gemäss Regel 137(2) EPÜ.

1. Verfahren zur Validierung eines Internet-Serviceanbieters (110) mittels eines personalisierten Validierungs-Siegels (125), umfassend:
• Anfordern eines Dienstes angeboten von dem Internet-Serviceanbieters durch einen Nutzer (100) über ein Nutzerendgerät (105), insbesondere einem Smartphone (105) oder einem Computer, das mit einem Kommunikationsnetzwerk, nämlich einem Mobilfunknetz und/oder einem Festnetz eines Netzwerkanbieters verbunden ist,
• Weiterleiten der Anfrage des Nutzers an einen dem Netzwerkanbieter zugeordneten Validierungs-Dienst (120), der die Identität des Internet-Serviceanbieters (110) ermittelt,
• Hinzufügen eines personalisierten dem Internet-Serviceanbieters unbekannten Validierungs-Siegels (125) des Nutzers (100) mittels des Validierungs-Dienstes (120) bei erfolgreicher Validierung des Internet-Serviceanbieters (110), wobei das Validierungs-Siegels (125) in einer Darstellung des Dienstes des Internet-Serviceanbieters (110) auf dem Nutzerendgerät oder auf einem weiteren Nutzerendgerät dargestellt wird, wobei das Hinzufügen des personalisierten Validierungs-Siegels (125) des Nutzers verhindert wird, wenn der Internet-Serviceanbieter (110) nicht erfolgreich validiert wird.

2. Verfahren nach Anspruch 1, wobei das personalisierte Validierungs-Siegel als visuelles und/oder auditives Signal bereitgestellt wird, das zuvor vom Nutzer festgelegt wurde, um eine eindeutige Authentifizierung zu ermöglichen.

3. Verfahren nach einem der Ansprüche 1 bis 2, wobei die Identität des Internet-Serviceanbieters durch Analyse von Netzwerkinformationen, wie IP-Adresse oder Serverzertifikaten, ermittelt wird und/oder durch einen KI Algorithmus der eine Internetseite des Internet-Serviceanbieters analysiert ermittelt wird.

4. Verfahren nach einem der Ansprüche 1 bis 3, wobei der Validierungs-Dienst eine verschlüsselte Kommunikation zwischen dem Nutzerendgerät und dem Internet-Serviceanbieter bereitstellt, um die Integrität der Daten während der Validierung sicherzustellen.

5. Verfahren nach einem der Ansprüche 1 bis 4, wobei das Validierungs-Siegel von dem Nutzerendgerät erfassbar ist und bei der Anforderung des Dienstes durch den Nutzer von dem Nutzerendgerät an den Validierungs-Dienst übermittelt wird.

6. Verfahren nach einem der Ansprüche 1 bis 5, wobei der Validierungs-Dienst basierend auf dem Validierungs-Siegel eine Filterfunktion durchführt, die den Zugang des Nutzers zu Diensten aus dem Internet regelt, insbesondere beschränkt.

7. Verfahren nach einem der Ansprüche 1 bis 6, wobei der Validierungs-Dienst eine Datenbank mit legitimen und betrügerischen Internet-Serviceanbietern führt, um betrügerische Anbieter automatisch zu identifizieren und das Hinzufügen des personalisierten Validierungs-Siegels zu verhindern.

8. Verfahren nach einem der Ansprüche 1 bis 7, wobei der Validierungs-Dienst eine Identität des Nutzers basierend auf einer Rufnummer-Kennung und/oder einer IP Adresse des Nutzeranschlusses ermittelt und dem Internet-Serviceanbieters eine Information übermittelt, wenn der Nutzer erfolgreich validiert wurde.

9. Verfahren nach einem der Ansprüche 1 bis 7, wobei das Validierungs-Siegel verschlüsselt von dem Nutzerendgerät an den Validierungs-Dienst übertragen wird, wie der Validierungs-Dienst den Schlüssel zum Entschlüsseln des Validierungs-Siegels besitzt.

10. Personalisierbares Validierungs-Siegel erstellt nach der Authentifizierung eines Internet-Serviceanbieters durch das Verfahren nach einem der Ansprüche 1 bis 9, wobei das Validierungs-Siegel folgende Eigenschaften aufweist:
• Hinzufügbar in eine Darstellung des Dienstes des Internet-Serviceanbieters auf dem Nutzerendgerät durch einen Validierungs-Dienst nach einer erfolgreichen Validierung des Dienstes,
• Eindeutigkeit des Validierungs-Siegels für den Nutzer, wobei das Validierungs-Siegel dem Internet-Serviceanbieter unbekannt ist.

11. Personalisierbares Validierungs-Siegel nach Anspruch 10, wobei das Validierungs-Siegel in verschiedenen Formaten bereitgestellt wird, einschließlich visuellen Symbolen, Audio-Signalen und/oder Sprachmeldungen.

12. Personalisierbares Validierungs-Siegel nach einem der Ansprüche 10 bis 11, wobei das Validierungs-Siegel eine Filterfunktion integriert, die bestimmte Dienste basierend auf dem Alter des Nutzers oder festgelegten Benutzerprofilen blockiert oder zulässt.

13. Personalisierbares Validierungs-Siegel nach einem der Ansprüche 10 bis 12, wobei das Validierungs-Siegel durch den Nutzer über eine mobile Anwendung oder eine Benutzeroberfläche erstellt, geändert und/oder gelöscht werden kann.

14. System zur Validierung eines Internet-Serviceanbieters mittels des Verfahrens nach einem der Ansprüche 1 bis 10, bereitgestellt durch einen Netzwerkanbieter, umfassend:
• ein Nutzerendgerät, das mit einem Kommunikationsnetzwerk nämlich einem Mobilfunknetz und/oder einem Festnetz des Netzwerkanbieters verbunden ist,
• ein Validierungs-Plattform, die einen Validierungs-Dienst bereitstellt, eingerichtet zum Empfangen von Anfragen eines Internetdienstes von dem Nutzerendgerät und zum Überprüfen einer Identität von Internet-Serviceanbietern, wobei der Validierungs-Dienst eingerichtet ist ein personalisiertes Validierungs-Siegel des Nutzers bei erfolgreicher Validierung des Internet-Serviceanbieters zu einer Darstellung des Dienstes auf dem Nutzerendgerät oder auf einem weiteren Nutzerendgerät hinzuzufügen.

15. Validierungs-Plattform eingerichtet zur Validierung eines Internet-Serviceanbieters mittels eines Validierungs-Dienstes eingerichtet zur Umsetzung des Verfahrens nach einem der Ansprüche 1 bis 10, wobei die Plattform eingerichtet ist zum
• Empfangen einer Anforderung eines Dienstes von einem Nutzerendgerät über ein Mobilfunknetz und/oder ein Festnetz eines Netzwerkanbieters, wobei der Dienst von dem Internet-Serviceanbieters im Internet angeboten wird,
• Empfangen und/oder Ermittlung einer Identität des Internet-Serviceanbieters,
• Hinzufügen eines dem Internet-Serviceanbieters unbekannten Validierungs-Siegels des Nutzers bei erfolgreicher Validierung des Internet-Serviceanbieters zu einer Darstellung des Dienstes auf dem Nutzerendgerät oder auf einem weiteren Nutzerendgerät.
